# EUROPÄISCHE PATENTSCHRIFT

(11) **EP 0 327 025 B1**
(45) Veröffentlichungstag und Bekanntmachung des Hinweises auf die Patenterteilung: **07.04.1993**
(21) Anmeldenummer: 89101639.6
(22) Anmeldetag: 31.01.1989
(51) Int. Cl.: B01D 63/06, B01D 65/00, B01D 69/00

(54) **Fluidundurchlässige Stellen aufweisende poröse Membranfilter und ihre Verwendung**
Porous membrane filter having fluid impermeable places and their use
Filtre de membrane poreux ayant des endroits imperméables aux fluides et son utilisation

(30) Priorität: 04.02.1988 DE 3803341
(43) Veröffentlichungstag der Anmeldung: 09.08.1989
(73) Patentinhaber: SARTORIUS AG, 37075 Göttingen (DE)
(72) Erfinder: Klüver, Horst, Dr., D-3402 Dransfeld (DE); Wünn, Eberhard, D-3400 Göttingen / OT Roringen (DE); Nussbaumer, Dietmar, Dr., D-3400 Göttingen (DE)
(74) Vertreter: Müller-Boré & Partner Patentanwälte

(56) Entgegenhaltungen:
- EP-A- 0 036 315
- EP-A- 0 096 306
- EP-A- 0 217 482
- US-A- 4 392 958
- US-A- 4 527 999

## Beschreibung

Die Erfindung betrifft poröse Membranfilter, insbesondere mikro- und ultraporöse Membranfilter, mit fluidundurchlässigen Randabschnitten die auf einer Seite des Membranfilters vorhanden sind und wobei die Struktur des Membranfilters auf dieser Seite geschlossene Poren aufweist.

Membranfilter aus den verschiedensten thermoplastischen Materialien, wie Celluloseacetaten, Polyamiden, Polyvinylidenfluorid oder Polysulfon, welche die verschiedensten Porengrößen und Porengrößenverteilungen aufweisen und symmetrisch oder asymmetrisch sowie hydrophil oder hydrophob sein können, sind bekannt. Typische Beispiele für derartige Membranfilter werden in der EP-A-00 96 306 beschrieben.

Derartige Membranfilter sind häufig spröde, mechanisch wenig belastbar und gegenüber einem Ein- bzw. Weiterreißen empfindlich, so daß bei ihrer Handhabung, beispielsweise beim Schneiden, Stanzen oder beim Einbau in Filterelemente, wie Filterkerzen, Platten- und Kissenmodule, Probleme auftreten. Insbesondere im ersteren Falle, in welchem die Membranfilter vorzugsweise in plissierter Form in Filterkerzengehäusen, durch Einbetten in kalt- oder warmhärtenden Mehrkomponentenharzen oder durch Einbetten in Schmelzen von synthetischen Thermoplasten und anschließende Erstarrung des Siegelmaterials fixiert werden, können Veränderungen ihrer physikalischen Eigenschaften innerhalb und unmittelbar außerhalb des Fixierungsbereiches eintreten, beispielsweise eine Hydrophilierung zuvor hydrophober Membranfilter, wie im Falle der Tensidwirkung von adsorbierten niedermolekularen Harzkomponenten, oder eine Hydrophobierung hydrophiler Membranfilter, beispielsweise bei der Belegung der hydrophilen Oberfläche der Membranfilter mit adsorbierten niedermolekularen Harzkomponenten bzw. bei der Desorption von Tensiden unter Temperatureinfluß, wobei auch eine Veränderung des kristallinen Anteils in teilkristallinen Polymeren und andere morphologische Veränderungen durch Temperatureinfluß eine Rolle spielen können. Diese insbesondere bei der Filterkerzenherstellung auftretenden Probleme werde näher in der bereits erwähnten EP-A-00 96 306 beschrieben, inbesondere das Problem, daß bei der Einbettung von hydrophilen Membranfiltern, wie Nylonmembranfiltern, in Polypropylenschmelzen bei der Kerzenherstellung die Membranfilter über den Einbettungsbereich hinaus in einer Randzone hydrophobiert werden, wobei diese nicht durch Wasser benetzbare Randzone eine Vielzahl von Poren enthält, die im Bubble-Point-Test bzw. Druckhaltetest (Integritätstest) der Filter-kerze einen Bypass für Luft darstellen und somit die Prüfbarkeit der Filterkerze unmöglich machen.

Um insbesondere das zuletzt angesprochene Problem zu lösen, sind aufwendige Verfahren bekannt geworden, um die Porosität von Membranfiltern an bestimmten gewünschten Stellen erheblich herabzusetzen und/oder einen Übergang von Hydrophilie in Hydrophobie bzw. umgekehrt zu vermeiden.

So wird beispielsweise in der US-A-3 407 252 ein Membranfilter beschrieben, dessen Randbereich durche Auflegen eines Streifens aus einem heißsiegelbaren vernetzbaren Epoxidharz (Schmelzkleber) abgedeckt ist.

Ferner ist es bekannt, den Rand einer zu plissierenden Polyvinylidenfluoridmembran, die in ein Filtrationsmodul eingebaut werden soll, mit einem Polypropylenfilm abzudecken, der mechanisch auf die Membrane aufgepreßt wird, wobei sich der Polypropylenfilm und/oder das Membranfilter in einem durch Lösungsmittel angequollenen Zustand befinden und anschließend das Lösungsmittel durch Abdampfen entfernt werden muß.

In der bereits erwähnten EP-A-00 96 306 wird die Randversiegelung von hydrophilen Membranfiltern, wie Nylonfiltern, durch einen heißsiegelbaren Polyesterfilm, welcher einseitig mit einem lösungsmittelfreien Polyethylenüberzug als Schmelzkleber versehen ist, beschrieben.

Ferner wird in dieser Literaturstelle zur Verringerung der Randporosität von Membranfiltern ein Verfahren vorgeschlagen, bei dem durch Gießen unterschiedlich zusammengesetzter Gießlösungen, wie Nylonlösungen, ein Filter erhalten wird, welches neben porösen Filterbereichen Randstreifen geringerer Porosität aufweist.

Außerdem beschreibt diese EP-A-00 96 306 die Verringerung der Porosität an den Randstreifen von Membranfiltern in der Weise, daß zwei übereinanderliegende Filterbahnen mechanisch verpreßt werden, wodurch ein Zusammenbrechen der mikro- bzw. ultraporösen Filtermatrix über die gesamte Filterdicke erfolgt.

Die EP-A-00 36 315 erwähnt neben dem "Heißsiegel"- und mechanischen Verfahren zusätzlich einen Prozeß, bei dem der empfindliche Bereich der porösen Filter durch Vergießen mit Leim behandelt wird.

Die US-A-4 527 999 betrifft ein asymmetrisches Membranfilter, dessen Oberschicht mittels einer Lösung plastifiziert bzw. angelöst wird, um Poren von geringer, aber kontrollierter Größe zu erhalten. Eine Schließung der Poren erfolgt dabei nicht.

Davon ganz abgesehen, daß diese vorstehend geschilderten bekannten Verfahren sehr aufwendig sind, ist es mit Ausnahme des Verfahrens, bei dessen Durchführung ein fluidundurchlässiger Film auf eine Seite des Membranfilters aufgebracht wird, nicht möglich, auf einer Seite eine fluidundurchlässige Struktur zu erzeugen, auf der entgegengesetzten Seite jedoch immer noch eine poröse Struktur beizubehalten, die beispielsweise dann erwünscht ist, wenn beim Einbetten des Membranfilters in eine Schmelze diese in die poröse Struktur eindringen soll, wodurch eine ideale Verankerungsmöglichkeit geschaffen wird.

Das erwähnte bekannte Verfahren des Aufpressens eines fluidundurchlässigen Materials auf ein Membranfilter bietet zwar die Möglichkeit, einerseits das Membranfilter an einer gewünschten Stelle fluidundurchlässig zu machen und andererseits auf der entgegengesetzten Seite eine poröse Struktur verfügbar zu haben, dieses Verfahren bedingt jedoch ebenso wie die meisten anderen der vorstehend beschriebenen Verfahren, daß ein Fremdmaterial in das Membranfilter eingebracht bzw. auf das Membranfilter aufgebracht wird, was in vielen Fällen unerwünscht ist.

Die Erfindung hat sich daher die Aufgabe gestellt, poröse Membranfilter zu schaffen, die ohne Einführung bzw. Aufbringung von Fremdmaterialien in einfacher Weise an gewünschten Stellen fluidundurchlässig gemacht worden sind, auf der der fluidundurchlässigen Stelle entgegengesetzten Stelle jedoch noch ihre poröse Membranstruktur aufweisen.

Diese Aufgabe wird durch die erfindungsgemäßen porösen Membranfilter, die insbesondere mikro- und ultraporöse Membranfilter sind, gelöst, welche dadurch gekennzeichnet sind, daß sie aufgrund einer Veränderung ihrer Struktur auf einer Membranseite in einen filmartigen Zustand fluidundurchlässige Stellen aufweisen.

Aufgrund dieser fluidundurchlässigen Stellen auf einer Seite sind die erfindungsgemäßen Membranfilter in idealer Weise geeignet für einen Einbau in beispielsweise Filterkerzen nach der Eingießmethode, da sie auf einer Seite noch eine poröse Struktur aufweisen, die eine ideale Verankerungsmöglichkeit für eindringendes flüssiges Harz bietet. Ein weiterer erheblicher Vorteil der erfindungsgemäßen Membranfilter besteht darin, daß die fluidundurchlässigen Stellen ohne Einbringen von Fremdmaterialien erzeugt werden können, so daß es sich um chemisch einheitliche Filter handelt.

Die fluidundurchlässigen Stellen, d.h. die gegenüber Gasen und Flüssigkeiten konvektiv undurchlässigen Stellen, sind vorzugsweise kontinuierlich oder diskontinuierlich an den Randabschnitten der Membranfilter vorgesehen, aufgrund der Einfachheit ihrer Erzeugung lassen sie sich jedoch auch an jeden beliebigen anderen Stellen in jeder beliebigen Konfiguration erzeugen.

Die fluidundurchlässigen Stellen, die auf einer Seite der erfindungsgemäßen porösen Membranfilter erzeugt worden sind, werden in der Weise geschaffen, daß die Membranstruktur auf einer Membranseite in einen flüssigen Zustand überführt wird, in welchem das Membranfiltermaterial verläuft und die Poren geschlossen werden, worauf das verlaufene Material verfestigt wird. Durch diesen Vorgang, der nachfolgend als Verfilmung bezeichnet wird, verschwindet auf einer Seite der erfindungsgemäßen Membranfilter die poröse Struktur bis zu einer gewünschten Tiefe der Membran, wodurch die Membran an der verfilmten Stelle fluidundurchlässig wird, jedoch auf der gegenüberliegenden Seite ihre poröse Struktur beibehält.

Der flüssige Zustand des Membranmaterials auf einer Seite der Membranfilter kann erfindungsgemäß in der Weise erzeugt werden, daß der Dampf eines Lösungsmittels oder Lösungsmittelgemisches für das Membranfiltermaterial gezielt auf die zu verfilmende Stelle auf einer Seite des Membranfilters einwirkengelassen und das Membranfiltermaterial bis zu der gewünschten Tiefe gelöst wird. Nach dem Verlaufen wird der Film durch Abkühlung verfestigt und das enthaltene Lösungsmittel, vorzugsweise durch Verdampfen und/oder Herauswaschen, entfernt.

Der Lösevorgang kann dadurch dosiert werden, daß dem Dampf des Lösungsmittels für das Membranfiltermaterial ein Nichtlösungsmittel für dieses Material in Dampfform zugemischt wird, das dann nach dem Auftreffen auf die eine Membranseite ebenso wie das Lösungsmittel kondensiert und eine verminderte Lösewirkung auf das Membranfiltermaterial hat. Besonders vorteilhaft ist es, zur Dampferzeugung ein azeotropes Gemisch von Löse- und Nichtlösemittel zu verwenden, weil dann die Zusammensetzung des Gemisches im Dampferzeuger konstant bleibt.

Diese Verfilmungsvariante der Einwirkung von Lösungsmitteldampf bzw. eines Gemisches aus Lösungsmitteldampf und Nichtlösungsmitteldampf wird vorzugsweise kontinuierlich in der Weise durchgeführt, daß eine Membranfilterbahn an einer Öffnung vorbeigeführt wird, aus der ein gezielter Strom eines Lösungsmittel- und gegebenenfalls Nichtlösungsmitteldampfes auf den zu verfilmenden Abschnitt auf den Membranfilter unter solchen Bedingungen bezüglich des Abstandes der Düse zu dem Membranfilter, der Temperatur und Konzentration des Lösungsmitteldampfes bzw. Nichtlösungsmitteldampfes sowie der Einwirkungszeit gerichtet wird, daß das Membranfiltermaterial bis zu der gewünschten Tiefe aufgelöst wird und verläuft, worauf anschließend das in dem gebildeten Film enthaltene Lösungsmittel und gegebenenfalls Nichtlösungsmittel entfernt wird, beispielsweise durch Aufblasen eines vorzugsweise erwärmten Gasstromes, insbesondere Luftstromes, oder durch Auswaschen. Auf diese Weise wird eine fehlstellenfreie, d.h. lochfreie, integrale Filmschicht auf einer Seite des Membranfilters, die fluidundurchlässig ist, erzeugt, wobei wegen der hohen Matrixporosität von Membranfiltern an der verfilmten Stelle eine Dickenabnahme der Membranfilterfolie erfolgt.

An den verfilmten Stellen besitzen die erfindungsgemäßen Membranfilter insbesondere im Falle von spröden und mechanisch wenig belastbaren und einreiß- bzw. weiterreißempfindlichen Membranfiltern eine erhöhte Festigkeit und können daher an diesen Stellen bevorzugt geschnitten oder gestanzt oder anderweitig mechanisch bearbeitet und mechanischen Beanspruchungen unterzogen werden. Insbesondere lassen sich, wie bereits erwähnt, die erfindungsgemäßen Membranfilter mit großem Vorteil zur Herstellung von Filterkerzen verwenden.

Als Lösungsmittel bzw. Nichtlösungsmittel kommen diejenigen Substanzen in Frage, die dafür bekannt sind, daß sie für das jeweils eingesetzte Membranfiltermaterial ein gutes Lösungsmittel bzw. Nichtlösungsmittel sind. Im Falle von Nylonmembranfiltern kann man beispielsweise heiße Dämpfe von Ameisensäure oder Salpetersäure als Lösungsmitteldämpfe verwenden.

Eine andere Möglichkeit der Verfilmung besteht darin, einen Strahl eines Gases mit einer Temperatur, die oberhalb der Erweichungs- bzw. Schmelztemperatur des Membranfiltermaterials liegt, in einer der zu verfilmenden Stelle entsprechenden Abmessung auf eine Seite des Membranfilters einwirken zu lassen. Auch in diesem Falle ist eine kontinuierliche Arbeitsweise möglich, wobei in Abhängigkeit von der gewünschten Verfilmungstiefe die Geschwindigkeit, mit der sich die Membranfilterfolie an der Düse, aus welcher der Gasstrahl austritt vorbeibewegt, der Abstand der Austrittsöffnung der Düse zu der Membranfilteroberfläche, die Temperatur des Gasstrahls und die Geschwindigkeit des Gasstroms gewählt werden.

Vorzugsweise läßt sich die Verfilmungstiefe dadurch steuern, daß die Membranfilterfolie auf der der Einwirkung des Gasstrahls entgegengesetzten Seite sich in Kontakt mit einer wärmeleitenden Unterlage befindet, da auf diese Weise ein die Verfilmungstiefe steuernder Temperaturgradient eingestellt werden kann.

Vorzugsweise wird der heiße Gasstrom in einem Winkel zwischen 45° und 135° auf die Membranfilteroberfläche gerichtet und entströmt einer Schlitzdüse, deren Breite der Abmessung des zu erzeugenden verfilmten Abschnitts entspricht.

Um eine Faltenbildung des zu behandelnden Materials im Bereich des Gasstromes mit der Folge der unkontrollierten Durchschmelzung der Filterbahn zu vermeiden, ist es zweckmäßig, die Membranfilterfolie unter einer hohen Zugspannung von beispielsweise 20 N/m zu halten, was bei einer kontinuierlichen Verfahrensweise durch eine entsprechende Einstellung der Umdrehungsgeschwindigkeit der Zugwalze(n) bewirkt wird, während bei einer diskontinuierlichen Verfahrensweise die Membrane beispielsweise in einen Spannrahmen eingespannt wird. Diese Einwirkung einer zugspannung kann auch bei der weiter oben erwähnten Variante der Einwirkung eines Lösungsmitteldampfes zweckmäßig sein. Die Fixierung kann auch in der Weise erfolgen, daß das wärmeleitende Material, das die Rückseite der Membranfilterfolie kontaktiert, mit einer Vielzahl kleiner Löcher versehen ist, an die ein Unterdruck angelegt wird, wodurch eine Fixierung der Membranfilterfolie bewirkt wird.

Das verwendete Gas besteht vorzugsweise aus Luft, kann jedoch bei sauerstoffempfindlichen Materialien auch aus einem Inertgas, wie Stickstoff, Argon etc., bestehen. Für die meisten thermoplastischen Materialien, aus denen die erfindungsgemäßen Membranfilter bestehen, ist jedoch Luft geeignet.

In den meisten Fällen ist die Verfilmung durch Aufblasen eines heißen Gases der Methode des Aufblasens eines Lösungsmitteldampfes vorzuziehen, da keine Maßnahmen zur Entfernung der eingesetzten Lösungsmittel erforderlich sind und auch keine Umweltprobleme bzw. Arbeitsschutzprobleme auftreten.

Die folgenden Beispiele erläutern die Erfindung.

### Beispiel 1

### Ameisensäuredampfverfilmung

4 kg 77,5 %ige Ameisensäure wird in einem 6 l Planschliffrundkolben (Mittelhals-Planschliffdeckel) in einer 1 kW Heizhaube mit 0,6 kW Leistungsaufnahme bis zum Sieden erwärmt. Das Wasser/Säure-Dampfgemisch besteht wie die siedende Lösung zu 77,5 % aus Ameisensäure und zu 22,5 % aus Wasser (Azeotropzusammensetzung). Das entweichende Dampfgemisch wird durch einen zweihalsaufsatz (NS 29) mit parallelen, 220 mm auseinanderstehenden Hälsen geführt. Zwei aus PTFE gefertigte Blöcke (120 x 60 x 25 mm L x B x H) mit 5 mm tiefem, in Laufrichtung der Filterbahn hinten offenem Dampfraum in den Maßen 110 x 40 x 5 mm werden als Auflageflächen für den zu behandelnden porösen Film auf die Öffnungen des Zweihalsaufsatzes gesteckt.

Eine 320 mm breite Bahn einer vliesverstärkten mikroporösen Polyamidmembrane (nomineller Porendurchmesser 0,2 µm) wird mit einer Bahngeschwindigkeit von 1200mm/min und einer Bahnspannung von 20 N/m unmittelbar über den zweiarmigen Versuchsaufbau geführt.

Zur Entfernung der in der den beiden einseitig verfilmten Streifen enthaltenen Ameisensäure wird die Membranbahn durch ein wäßriges Spülbad und anschließend über eine Trockentrommel geführt und aufgewickelt.

Zur Herstellung einer Filterkerze wird die plissierte Materialbahn in der Weise auf die erforderliche Breite geschnitten, daß sich beide Schnittstellen etwa in der Mitte der verfilmten Streifen befinden. Als Endkappen-Vergußmasse wird extrudiertes Polypropylen verwendet. Zum Vergleich wird auf die gleiche Weise eine Kerze aus nicht verfilmtem Filtermaterial hergestellt.

Die Integritätsdaten der wasserbenetzten Filterkerzen gehen aus der Tabelle 1 hervor.

**Tabelle 1**

| | Kerze A (Vergleichsbeispiel) | Kerze B (Beispiel 1) |
|---|---|---|
| Luftdiffusion (ml/min) (Druckhaltetest bei Δp = 2,5 bar) | > 50 | 17 |
| Bubble-Point (bar) | 3,7 | 3,7 |
| Filmdicke (µm) (REM-Auswertung) | - | 10 |

Die in Tabelle 1 vergleichend gegenübergestellten Meßwerte aus Integritätsmessungen zeigen, daß durch Randverfilmung des in PP einzubettenden Filtermaterials ein mindestens dreifach niedrigerer Luftdiffusionswert erreicht wird.

### Beispiel 2

### Heißgasverfilmung

Eine 320 mm breite Bahn einer unverstärkten mikroporösen Polyamidmembran (nomineller Porendurchmesser 0,45 µm) wird mit einer Bahngeschwindigkeit von 1500 mm/min und einer Bahnspannung von 20 N/m um eine Edelstahlwalze von 50 mm Durchmesser (Mantelstärke 5 mm, ungekühlt, bei Raumtemperatur) so geführt, daß die Rollenumschlingung 150° beträgt.

Ein schwingungsfest montiertes Heißluftgerät (Fa. Leister, Typ Triac) wird so vor der laufenden Bahn plaziert, daß der Abstand zwischen aufgesteckter Schlitzdüse (20 x 1 mm) und Oberfläche der mikroporösen Bahn 1,5 mm beträgt. Der 320° C heiße Luftstrom (Thermostateinstellung 3,2) trifft in einem Winkel von 90° auf die Oberfläche des die Edelstahlwalze umschlingenden Filters. Die Dicke des erhaltenen verfilmten Streifens wird im REM mit 10 - 13 µm gemessen.

Die so einseitig verfilmte Filterbahn (einstreifig) wird ohne weitere Nachbehandlung für den nachfolgend beschriebenen Test zur Ermittlung der Weiterreißfestigkeit an einer Zugprüfmaschine der Fa. Adamel-Lhomargy, Typ 21B, eingesetzt:
Aus der behandelten Filterbahn werden Proben (60 x 150 mm) so geschnitten, daß der verfilmte 20 mm breite Streifen von 30 bzw. 100 mm nicht behandeltem Material begrenzt ist. 7 (Versuch 1) bzw. 17 (Versuch 2) Proben werden Film auf Film übereinandergelegt und das Probenpaket mittig 80 mm weit von oben eingeschnitten, in den Aufnahmen der Meßvorrichtung fixiert und die Weiterreißfestigkeit bestimmt. Die Ergebnisse gehen aus der Tabelle 2 hervor.

**Tabelle 2**

| Versuch Nr. | Anzahl d. Filter übereinander | Reißfestigkeit (daN) | |
|---|---|---|---|
| | | unbehandelt | verfilmt |
| 1 | 17 | 0,08 | 0,36 |
| 2 | 7 | 0,04 | 0,20 |

Die Ergebnisse in Tabelle 2 zeigen, daß die Weiterreißfestigkeit im Bereich der Verfilmung um den Faktor 4,5 bis 5 erhöht ist.

## Patentansprüche

1. Poröses Membranfilter, insbesondere mikro- oder ultraporöses Membranfilter, mit fluidundurchlässigen Randabschnitten, die auf einer Seite des Membranfilters vorhanden sind und wobei die Struktur des Membranfilters auf dieser Seite geschlossene Poren aufweist,
**dadurch gekennzeichnet,**
daß diese sich auf einer Seite befindlichen fluidundurchlässigen Randabschnitte durch eine durch Verfilmung veränderte Struktur des Membranfiltermaterials selbst gebildet sind, die geschlossene Poren aufweist.

2. Verfahren zur Herstellung eines porösen, insbesondere mikro- oder ultraporösen Membranfilters gemäß Anspruch 1, wobei man die fluidundurchlässigen Randabschnitte erzeugt, indem man die Struktur des Membranfilters auf einer Seite des Membranfilters durch Verfilmung verändert, wobei man bei der Verfilmung die Membranstruktur in einen flüssigen Zustand überführt, das Membranmaterial unter Schließung der Poren verlaufen läßt und das verlaufene Membranmaterial verfestigt.

3. Verfahren nach Anspruch 2, dadurch gekennzeichnet, daß man den flüssigen Zustand der Membranstruktur erzeugt, indem man ein Lösungsmittel oder Lösungsmittelgemisch für das Membranmaterial verdampft und das Membranmaterial durch Einwirkung dieses Dampfes löst.

4. Verfahren nach Anspruch 3, dadurch gekennzeichnet, daß man dem Dampf des Lösungsmittels einen Dampf eines Nichtlösungsmittels für das Membranmaterial beimischt.

5. Verfahren nach Anspruch 4, dadurch gekennzeichnet, daß man Lösungsmittel und Nichtlösungsmittel so wählt, daß die Zusammensetzung des Dampfgemisches der des Azeotrops der beiden Komponenten entspricht.

6. Verfahren nach Anspruch 2, dadurch gekennzeichnet, daß man den flüssigen Zustand der Membranstruktur erzeugt, indem man das Membranmaterial durch Einwirkung eines heißen Gases schmilzt.

7. Verfahren nach Anspruch 6, dadurch gekennzeichnet, daß man die Temperatur des heißen Gases so wählt, daß sie über dem Schmelzpunkt des Membranmaterials liegt.

8. Verfahren nach den Ansprüchen 6 und 7, dadurch gekennzeichnet, daß man während der Einwirkung des heißen Gases auf die eine Membranseite die dieser Seite entgegengesetzte Membranseite in Kontakt mit einem wärmeleitenden Material hält.

9. Verfahren nach Anspruch 7, dadurch gekennzeichnet, daß man die der Einwirkungsseite entgegengesetzte Membranseite auf einer Temperatur unterhalb des Schmelzpunkts des Membranmaterials hält.

10. Verwendung eines Membranfilters gemäß den Ansprüchen 1 bis 9 zur Herstellung von Filterelementen, insbesondere Filterkerzen.

## Claims

1. Porous membrane filter, in particular a microporous or ultraporous membrane filter with fluid-impermeable edge parts which are present on one side of the membrane filter and wherein the structure of the membrane filter on said side has closed pores, characterised in that said fluid-impermeable edge parts situated on one side are formed by a structure of the membrane filter material itself, modified by film formation, which has closed pores.

2. Process for the preparation of a porous, particularly a microporous or ultraporous membrane filter according to claim 1, wherein the fluid-impermeable edge parts are produced by modifying the structure of the membrane filter on one side of the membrane filter by film formation, whereby the membrane structure is converted to a liquid state during film formation, the membrane material is allowed to run, closing the pores, and the membrane material that has run is solidified.

3. Process according to claim 2, characterised in that the liquid state of the membrane structure is produced by evaporating a solvent or solvent mixture for the membrane material and dissolving the membrane material by the action of said vapour.

4. Process according to claim 3, characterised in that a vapour of a non-solvent for the membrane material is admixed with the vapour of the solvent.

5. Process according to claim 4, characterised in that solvent and non-solvent are chosen such that the composition of the vapour mixture corresponds to that of the azeotrope of the two components.

6. Process according to claim 2, characterised in that the liquid state of the membrane structure is produced by melting the membrane material by the action of a hot gas.

7. Process according to claim 6, characterised in that the temperature of the hot gas is chosen such that it is above the melting point of the membrane material.

8. Process according to claims 6 and 7, characterised in that, whilst the hot gas is acting on one side of the membrane, the side of the membrane opposite said side is kept in contact with a heat-conducting material.

9. Process according to claim 7, characterised in that the side of the membrane opposite the reaction side is kept at a temperature below the melting point of the membrane material.

10. Use of a membrane filter according to claims 1 to 9 for the preparation of filter elements, particularly filter candles.

## Revendications

1. Filtre de membrane poreux, en particulier filtre de membrane microporeux ou ultraporeux, comportant des segments marginaux imperméables aux fluides, situés sur un côté du filtre de membrane et par lesquels la structure du filtre de membrane présente sur ce côté des pores clos, caractérisé en ce que lesdits segments marginaux imperméables aux fluides situés sur un côté se sont formés spontanément sur la structure du matériau du filtre de membrane, modifiée par la production d'un film et présentant des pores clos.

2. Procédé de fabrication d'un filtre de membrane poreux, en particulier microporeux ou ultraporeux, selon la revendication 1, où les segments marginaux imperméables aux fluides sont produits par la modification de la structure sur un côté du filtre de membrane par la production d'un film, où durant la production du film la structure de la membrane passe en une phase liquide, le matériau de la membrane se développe en refermant les pores et le matériau de membrane développé se consolide.

3. Procédé selon la revendication 2, caractérisé en ce que l'on provoque l'état fluide de la structure de la membrane en vaporisant un solvant ou un mélange de solvants pour le matériau de la membrane, ce matériau de membrane étant ensuite dissous sous l'effet de ladite vaporisation.

4. Procédé selon la revendication 3, caractérisé en ce que l'on mélange à la vapeur du solvant la vapeur d'un agent non solvant pour le matériau de la membrane.

5. Procédé selon la revendication 4, caractérisé en ce que l'agent solvant et l'agent non solvant sont choisis de telle sorte que la composition des vapeurs mélangées corresponde à celle du mélange azéotrope des deux composants.

6. Procédé selon la revendication 2, caractérisé en ce que l'on produit l'état fluide de la structure de la membrane en faisant fondre le matériau de la membrane sous l'effet d'un gaz chaud.

7. Procédé selon la revendication 6, caractérisé en ce que l'on choisit la température du gaz chaud de telle sorte qu'elle se situe au-dessus du point de fusion du matériau de la membrane.

8. Procédé selon les revendications 6 et 7, caractérisé en ce que durant l'application du gaz chaud sur un côté de la membrane l'autre côté opposé de la membrane soit maintenu en contact avec un matériau thermoconducteur.

9. Procédé selon la revendication 7, caractérisé en ce que le côté de la membrane opposé au côté traité soit maintenu à une température inférieure au point de fusion du matériau de la membrane.

10. Utilisation d'un filtre de membrane selon les revendications 1 à 9 visant la fabrication d'éléments de filtrage, en particulier de filtres en forme de bougie.
